# EUROPEAN PATENT SPECIFICATION

(11) **EP 4 299 428 B1**
(45) Date of publication and mention of the grant of the patent: **23.07.2025**
(21) Application number: 22182218.2
(22) Date of filing: 30.06.2022
(51) Int. Cl.: B62M 3/08

(54) **FOLDABLE PEDAL**
KLAPPPEDAL
PÉDALE PLIABLE

(43) Date of publication of application: 03.01.2024
(73) Proprietor: VP Components Co., Ltd., Taichung City 438 (TW)
(72) Inventor: LIN, Wen-Hwa, 438 Taichung City (TW)
(74) Representative: Viering, Jentschura & Partner mbB Patent- und Rechtsanwälte

(56) References cited:
- CN-U- 210 437 339
- DE-A1- 2 200 990
- FR-A1- 2 004 237
- FR-A1- 2 726 803
- GB-A- 572 157

## Description

### BACKGROUND OF THE INVENTION

### 1. Field of the Invention:

The present invention relates to pedals, and more particularly, to a foldable pedal which is folded to reduce volume for facilitating transportation.

### 2. Description of the Related Art:

As disclosed by Taiwan patent M502632, a foldable pedal for bicycle is disclosed, comprising a connection member, a rotation member, and a shaft, with two elastic members disposed between the connection member and the rotation member. When being folded, the user grips the rotation member and push it toward the distal end, and the rotation pillar compresses the elastic member, such that the cross bolt leaves the cross-shaped groove, and the rotation member is rotated to the needed angle with the rotation pillar as the rotation shaft, thereby completing the folding process.

However, the distance from the rotation pillar to the crank remains relatively longer, so that when the pedal is folded, there is still a certain distance between the frame-shaped rotation member and the crank of the bicycle. As a result, the overall volume of the bicycle is not effectively reduced even after the pedal being folded, which fails to facilitate the package and transportation operation of the manufacturer. Also, the folding structure of the pedal is within the range of the rotation member, and it includes many components. After bearing the repeatedly imposed pedaling force by the user, the service life of components is easily affected. Further, the length of the shaft applied by such pedal is relatively shorter, failing to provide an optimal supporting force to the pedal.

Also, GB572157A discloses a foldable pedal according to the preamble of claim 1, comprising two-part pin, which has a fastening device for fixing the pedal at an appropriate position. The fastening device comprises a slidable sleeve. When the slidable sleeve moves toward the crank to compress the spring, the pedal is allowed to rotate or to be folded at a position approximately parallel to the crank.

DE2200990A1 discloses another foldable bicycle pedal, which applies the fastening or loosening of the screwing nut disposed between the pedal and the crank to fix the pedal at the operation position or the folded position.

FR2726803A1 discloses a pedal installation device, wherein the distal end of the connection member of the pedal is combined in the sleeve of the crank, with a transverse axle disposed on the distal end of the connection. When the transverse axle slides out of the sleeve, the pedal is allowed to be folded with respect to the crank.

FR2004237A1 discloses a bicycle pedal structure, where in the pedal is connected with the crank through a coupling, and the head of the coupling in the pedal is fixed by the cone-shaped surface of the eccentric pin. When a pressure is imposed on the button, the eccentric pin is shifted, so that the pedal is allowed to be folded downward.

CN210437339 discloses a pedal and a crank. The crank comprises a rotation shaft, which is combined with the pedal. The surface of the joint between the rotation axle and the pedal protrudes to form an arc shape structure, and the arc shape structure facilitates the rotational folding of the pedal.

### SUMMARY OF THE INVENTION

To improve the issues above, the present invention discloses a foldable pedal, wherein the engagement device is disposed on the connection member, which effectively prevents the direct effect caused by the pedaling force and increases the service life of the engagement device.

For achieving the aforementioned objectives, an embodiment of the present invention provides a foldable pedal, comprising a connection member, a shaft, a pedal body, and an engagement device. The connection member comprises a first connection end and a second connection end arranged in opposite to the first connection end along a first axis. The shaft comprises a first end and a second end arranged in opposite to the first end. The first end is pivotally connected with the second connection end along a second axis perpendicular to the first axis, so that the shaft is allowed to pivot with respect to the connection member. The pedal body comprises a shaft bore for receiving the second end of the shaft, and the shaft is rotatable with respect to the shaft bore. The engagement device is disposed on the connection member, and switchable between an engagement position and a release position. At the engagement position, the engagement device is engaged with the first end of the shaft, so that the shaft is in coaxial alignment with the first axis. At the release position, the pedal body is foldable with respect to the crank.

With such configuration, the engagement device of the present invention is disposed between the first connection end and the pivot point, such that the folded pedal is arranged closer to the crank, effectively reducing the overall volume, facilitating the packaging and transportation of the bicycle.

The aforementioned contents and other objectives, technical features and advantages of the present invention will be best understood referring to following detailed description, embodiments, and attached drawings

### BRIEF DESCRIPTION OF THE DRAWINGS

**Fig. 1** is a perspective view of the foldable pedal in accordance with an embodiment of the present invention.
**Fig. 2** is an exploded view of the foldable pedal in accordance with an embodiment of the present invention.
**Fig. 3** is a cross-sectional view taken along line 3-3 in **Fig. 1****,** illustrating the shaft and the first axis being arranged in coaxial alignment, and the present invention being in the unfolded status.
**Fig. 4** is a cross-sectional view taken along line 4-4 in **Fig. 1****,** illustrating the engagement device at the engagement position.
**Fig. 5** is a partially enlarged view of **Fig. 4****,** illustrating the engagement portion of the foldable pedal being engaged on two sides of the shaft.
**Fig. 6** is a schematic view of structure taken along line 6-6 in **Fig. 5****.**
**Fig. 7** is a schematic view of the operation of the engagement device, illustrating the two operation members being pressed, whereby the engagement member is disengaged with the shaft.
**Fig. 8** is a schematic view of structure taken along line 8-8 in **Fig. 7****.**
**Fig. 9** is a schematic view of the status of the foldable pedal, illustrating the shaft being pivotally arranged in perpendicular with respect to the first axis, and the present invention being in the folded status.
**Fig. 10** is a schematic view of the operation of the foldable pedal.

### DETAILED DESCRIPTION OF THE INVENTION

Embodiments of the present invention are illustrated in detail along with the drawings. However, the technical features included by the present invention are not limited to certain embodiments hereby provided. Scope of the present invention shall be referred to the claims, which include all the possible replacements, modifications, and equivalent features.

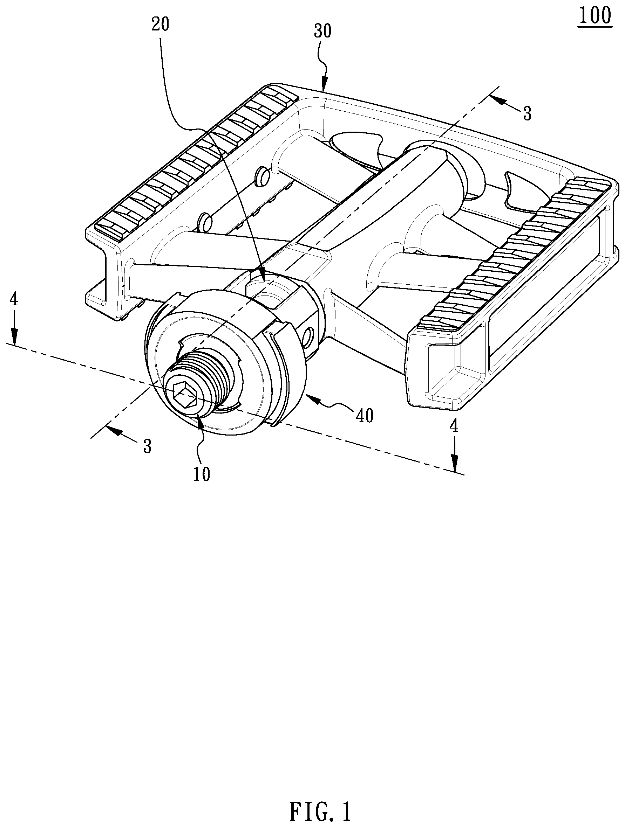

Referring to **Fig. 1** to **Fig. 10****,** the present invention provides a foldable pedal **100,** comprising a connection member **10,** a shaft **20,** a pedal body **30,** and an engagement device **40.**

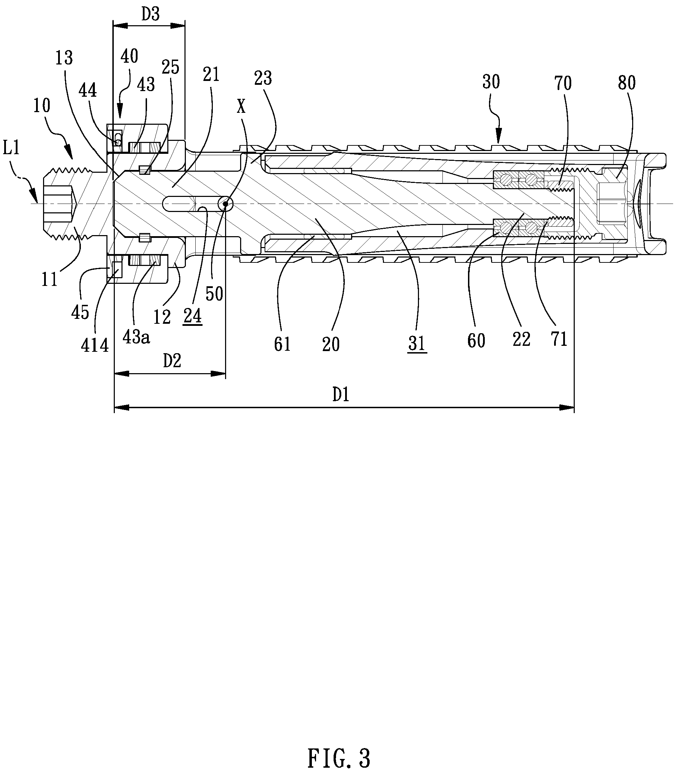

The connection member **10** comprises a first connection end **11** and a second connection end **12** arranged in opposite to the first connection end **11** along a first axis **L1.** In the embodiment, the first connection end **11** is provided with an outer thread for screwing a crank **1** of a bicycle. The second connection end **12** comprises a combination bore **13** on the first axis **L1** toward the first end **11.** Each of the two sides of the connection member **10** comprises a through groove **14** passing therethrough the combination bore **13.** Also, the second connection end **12** of the connection member **10** comprises a receiving space **121** passing through the combination bore **13.** The receiving space **121** comprises a blocking portion **122.** The second connection end **12** further comprises a pivot bore **15** along a second axis **L2** perpendicular to the first axis **L1.** Therein, as shown by **Fig. 3****,** the first axis **L1** crosses the second axis **L2** at a pivot point **X.** The center of the pivot bore **15** and the pivot point **X** are concentric.

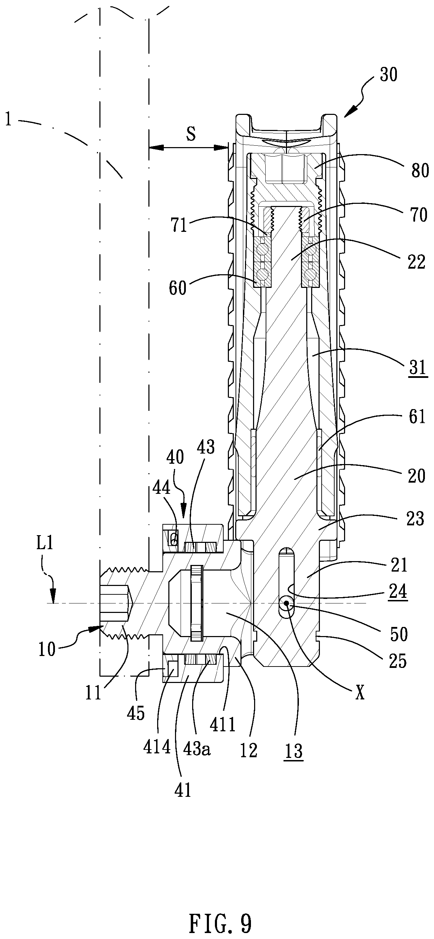

The shaft **20** comprises a first end **21** and a second end **22** arranged in opposite to the first end **21,** with a protrusion ring **23** disposed between the first end **21** and the second end **22.** The end surface length from the protrusion ring **23** to the first end **21** is smaller than the end surface length from the protrusion ring **23** to the second end **22.** The first end **21** is pivotally connected with the second connection end **12** along the second axis **L2,** and the first end **21** passes through the receiving space **121,** such that the shaft **20** pivots with respect to the connection member **10.** In the embodiment, the first end **21** of the shaft **20** comprises a slide groove **24** and a ring groove **25** disposed along the axial direction. The shaft **20** passes through the slide groove **24** and the pivot bore **15** of the second connection end **12** of the connection member **10** through a pivot axle **50.** Referring to **Fig. 3****,** which illustrates the unfolded status of the present invention, the pivot axle **50** is at a first position of the slide groove **24,** and the slide groove **24** is parallel to the first axis **L1.** Referring to **Fig. 9****,** which illustrates the folded status of the present invention, the pivot axle **50** is at a second position of the slide groove **24,** and the slide groove **24** is perpendicular to the first axis **L1** and the second axis **L2.** Therein, the length of the shaft **20** is defined as **D1,** the length from the pivot point **X** to the end edge of the first end **21** is defined as **D2, D2** is smaller than **D1,** and **D2** is smaller than a half of **D1.** Also, the depth of the combination bore **13** is defined as **D3,** and **D2** is larger than **D3.**

The pedal body **30** comprises a shaft bore **31** passing therethrough for receiving the second end **22** of the shaft **20.** Also, the shaft **20** is rotatable with respect to the shaft bore **31.** In the embodiment, two bearings **60** are mounted around the second end **22** of the shaft **20** for providing a supporting effect in the shaft bore **31.** The bearing **60** comprises an anti-loosening screw member **70** and a washer **71** disposed on one side thereof. The screw member **70** is screwed to the second end **22** for preventing the shaft **20** from leaving the shaft bore **31.** The washer **71** is mounted between the bearing **60** and the anti-loosening screw member **70** for increasing the contact area. Also, the shaft **20** comprises a support ring **61** between the first end **21** and the second end **22** for providing a supporting effect in the shaft bore **31,** such that the shaft **20** is simultaneously supported by the bearing **60** and the support ring **61,** whereby the shaft **20** is able to rotate with respect to the pedal body **30.** A fastening screw member **80** is screwed to an end of the shaft bore **31** away from the connection bore **10** for closing the shaft bore **31,** so that the shaft bore **31** is not exposed.

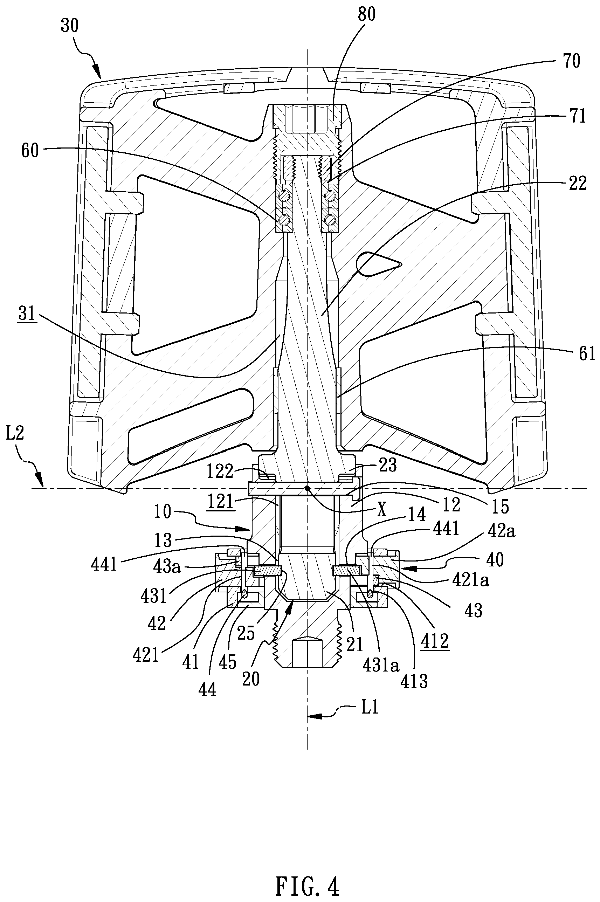

Therein, the protrusion ring **23** of the shaft **20** is disposed on the outer side of the shaft bore **31.** As shown by **Fig. 4****,** the block portion **122** of the connection member **10** prevents the protrusion ring **23** of the shaft **20** from completely entering the receiving space **121.** Because the length of the end surface from the protrusion ring **23** to the first end **21** is smaller than the length of the end surface from the protrusion ring **23** to the second end **22.** Also, the length of the shaft **20** in the pedal body **30** is larger than a half of the length of the pedal body **30.** Therefore, the second end **22** of the shaft **20** has a sufficient length for providing a sufficient supporting force for effectively bearing the pedaling force imposed on the pedal body **30.**

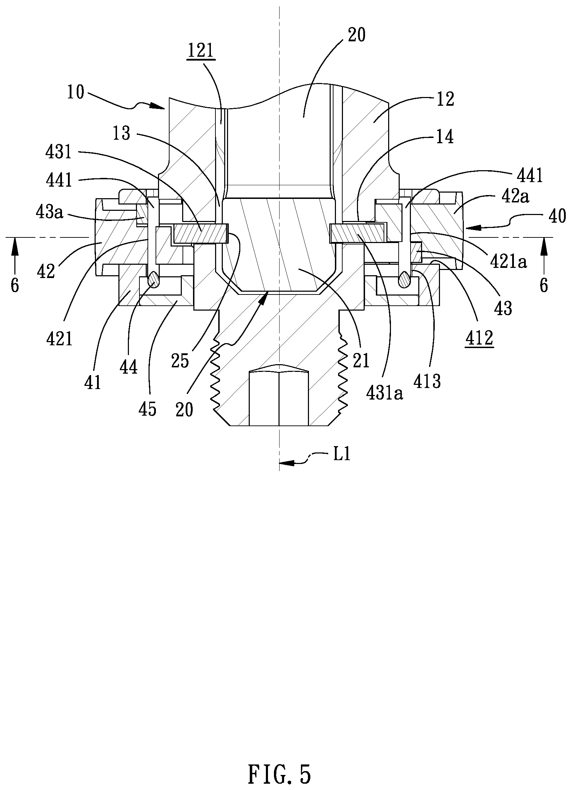

The engagement device **40** is disposed on the connection member **10** and switchable between an engagement position and a release position. Referring to **Fig. 4** and **Fig. 5****,** when the engagement device **40** is at the engagement position, the engagement device **40** is able to be engaged with the first end **21** of the shaft **20,** so that the shaft **20** and the first axis **L1** are arranged in coaxial alignment, and the pivot axle **50** is at the first position. Referring to **Fig. 9****,** when the engagement device **40** is at the release position, the pivot axle **50** is at the second position, so that the pedal body **30** is able to be folded about the pivot point **X** with respect to the crank **1.** Therein, the engagement device **40** and the pivot point **X** are on the outer side of the pedal body **30,** and the engagement device **40** is between the first connection end **11** and the pivot point **X.** In other words, the second axis **L2** does not pass through the engagement device **40.** Thus, the engagement device **40** is not disposed in the pedal body **30,** so as to be prevented from directly bearing the pedaling force, thereby increasing the service life of the engagement device **40.**

The engagement device **40** comprises a sleeve **41,** two operation members **42, 42a,** two engagement members **43, 43a,** an elastic member **44,** and a cover **45.** The sleeve **41** comprises a sleeving bore **411** to be mounted around the connection member **10.** The sleeve **41** comprises two installation grooves **412** disposed on two sides thereof and connected with the sleeving bore **411.** The two installation grooves **412** face the positions of the two through grooves **14** of the connection member **10,** and the two installation grooves **412** are applied to contain the two operation members **42, 42a** therein. The sleeve **41** comprises two position limiting grooves **413** disposed on two sides of the sleeving bore **411** and connected therewith.

Each of the two operation members **42, 42a** are formed in a half-moon shape. The two operation members **42, 42a** are symmetrically disposed in the installation grooves **412** on two sides of the sleeve **41,** and slidable in a direction perpendicular to the first axis **L1.** In the embodiment, each of the operation members **42, 42a** comprises an insertion bore **421, 421a.**

The two engagement members **43, 43a** are disposed between the first end **21** of the shaft **20** and the two operation members **42, 42a.** The two engagement members **43, 43a** are formed in a ring shape and mounted around the connection member **10** to be overlapped on the first axis **L1.** Each of the engagement members **43, 43a** comprises a concavely arc-shaped engagement portion **431, 431a.** Also, a linkage portion **432, 432a** is disposed in opposite to the engagement portions **431, 431a,** and the linkage portions **432, 432a** is formed in a notch.

The elastic member **44** comprises two foot ends **441** and an arc-shaped deformation portion **442** between the two foot ends **441,** with a transition section **443** arranged between the deformation portion **422** and each of the foot ends **441,** wherein the two transition sections **443** bend the two foot ends **441** to extend in a direction parallel to the first axis **L1.** The foot ends **441** passes through the insertion bores **421, 421a** of the corresponding operation members **42, 42a,** respectively, so as to be linked with the linkage portions **432, 432a** of the corresponding engagement members **43, 43a.**

The sleeve **41** comprises a combination groove **414** on one end, in which the cover **45** is combined, thereby achieving a dust-proof function and an aesthetic appearance of the engagement device **40.**

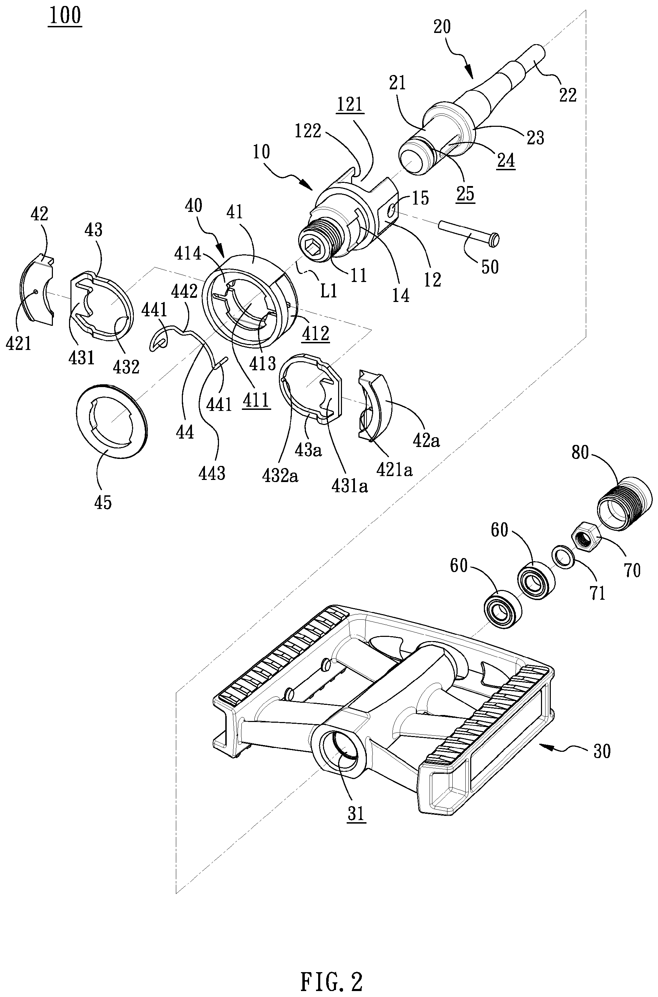

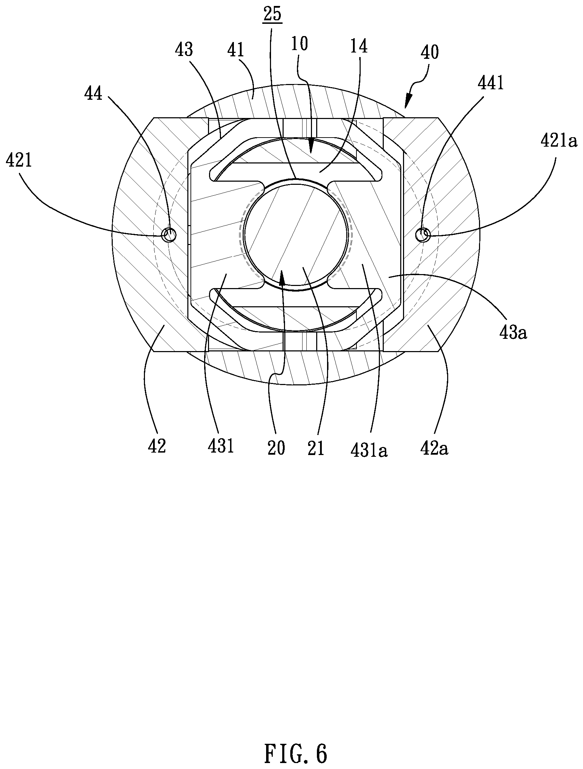

Referring to **Fig. 5** and **Fig. 6** in view of **Fig. 2****,** at the engagement position, the two foot ends **441** abut in the two position limiting grooves **413,** respectively, such that the elastic tension of the deformation portion **442** keeps the two operation members **42, 42a** leaning away from the first axis **L1.** With the outward expanding of the two foot ends **441,** the linkage portions **432, 432a** of the engagement members **43, 43a** leans in a direction away from the first axis **L1,** such that the engagement portions **431, 431a** of the two engagement members **43, 43a** permanently move toward each other to be engaged on two sides of the ring groove **25** of the shaft **20** through the through groove **14.** At this position, the first end **21** of the shaft **20** is inserted in the combination bore **13.** Therefore, the foldable pedal **100 is** in the unfolded status to be pedaled by the user riding the bicycle, as shown by **Fig.** 1 and **Fig. 4****.**

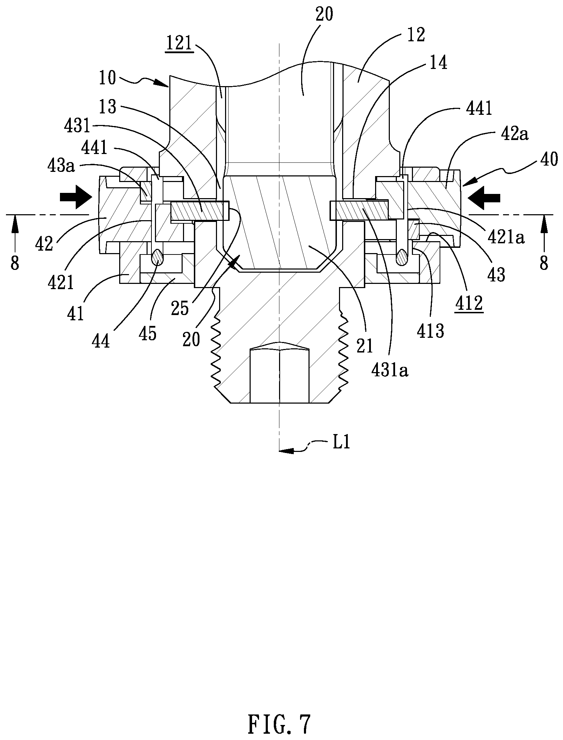

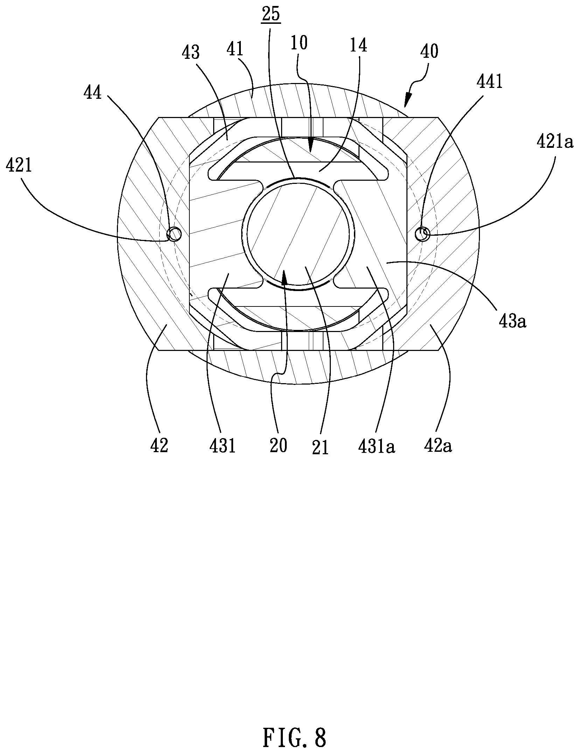

Referring to **Fig. 7** and **Fig. 8** in view of **Fig. 2****,** when the two operation members **42, 42a** are pressed by a force to slide perpendicularly in a direction to the first axis **L1,** the operation members **42, 42a** cause the deformation portion **442** of the elastic member **44** to elastically deform, so that the two foot ends **441** respectively slide toward the first axis **L1** along the two position limiting grooves **413,** reducing the distance between the two foot ends **441,** whereby the engagement device **40** changes from the engagement position to the release position. Meanwhile, the two foot ends **441** no longer abut against the linkage portions **432, 432a** of the engagement members **43, 43a.** Also, the two operation members **42, 42a** simultaneously push the end edge of the linkage portions **432, 432a** of the two engagement members **43 43a,** forcing the engagement portions **431, 431a** of the two engagement members **43, 43a** to move in opposite directions, thereby releasing the engagement between the engagement portions **431, 431a** and the ring groove **25** of the shaft **20.** Therefore, the user is allowed to pull the pedal body **30** toward a direction in opposite to the combination bore **13,** thereby pulling the first end **21** of the shaft **20** out of the combination bore **13.** Next, the user turns the pedal body **30,** such that the shaft **20** pivots to be arranged in a perpendicular alignment with respect to the first axis **L1,** whereby the pedal body is folded with respect to the crank **1.** As shown by **Fig. 9****,** after the folding process, the distance from the pedal body **30** to the crank **1** is defined as **S.** Therefore, the pedal body **30** is arranged relatively closer to the crank **1,** effectively reducing the overall volume and facilitating the transportation of the bicycle.

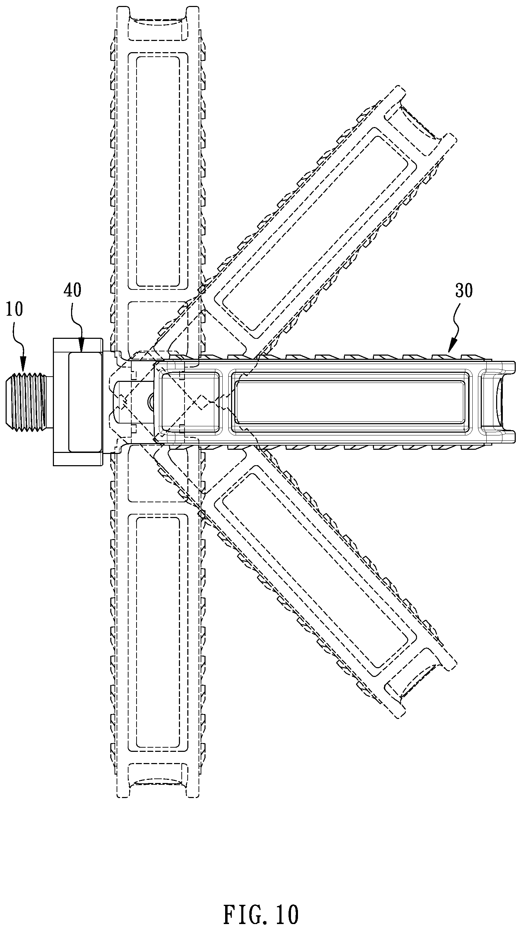

Further, referring to **Fig. 10****,** the pedal body **30** is allowed to be turned and folded upward in accordance with the directions shown in the drawing, so that the folded pedal faces upward; or alternatively, the pedal body **30** is allowed to be folded downward, so that the folded pedal faces downward. In other words, the pedal body **30** is able to be folded in different ways according to user's demand.

With the foregoing configuration, the present invention achieves following advantages.

The engagement device **40** of the present invention is disposed on the connection member **10,** so as to prevent the pedal body **30** from the direct effect of the pedaling force and improves the service life of the engagement device **40.**

The pivot point **X** of the present invention is located on the outer side of the pedal body **30,** so that the pedal body **30** is arranged closer to the crank **1** after being folded, thereby reducing the overall volume and facilitating the transportation of the bicycle.

The length of the shaft **20** in the pedal body **30** is larger than a half of the length of the pedal body **30,** so that the second end **22** of the shaft **20** has a sufficient length for providing a supporting force for effectively bearing the pedaling force imposed on the pedal body **30,** achieving a greater structure strength.

Although particular embodiments of the invention have been described in detail for purposes of illustration, various modifications and enhancements may be made without departing from the scope of the invention. Accordingly, the invention is not to be limited except as by the appended claims.

## Claims

1. A foldable pedal (100), comprising:
a connection member (10) comprising a first connection end (11) and a second connection end (12) arranged in opposite to the first connection end (11) along a first axis (L1);
a shaft (20) comprising a first end (21) and a second end (22) arranged in opposite to the first end (21), the first end (21) being pivotally connected with the second connection end (12) along a second axis (L2) which is perpendicular to the first axis (L1), so that the shaft (20) pivots with respect to the connection member (10);
a pedal body (30) comprising a shaft bore (31) for receiving the second end (22) of the shaft (20), the shaft (20) being rotatable with respect to the shaft bore (31);
an engagement device (40) disposed on the connection member (10) and switchable between an engagement position and a release position; when the engagement device (40) is at the engagement position, the engagement device (40) is engaged with the first end (21) of the shaft (20), such that the shaft (20) is arranged in coaxial alignment with the first axis (L1); when the engagement device (40) is at the release position, the pedal body (30) is foldable with respect to a crank (1),
wherein the first axis (L1) crosses the second axis (L2) at a pivot point (X); the engagement device (40) and the pivot point (X) are arranged on an outer side of the pedal body (30), and the engagement device (40) is between the first connection end (11) and the pivot point (X); at the release position, the pedal body (30) is folded about the pivot point (X) with respect to the crank (1),
**characterized in that**:
a pivot axle (50) is included, the first end (21) of the shaft (20) comprises a slide groove (24) disposed along an axial direction, and the pivot axle (50) passes through between the slide groove (24) and the second connection end (12) along the second axis (L2); at the engagement position, the pivot axle (50) is at a first position of the slide groove (24), and the slide groove (24) is parallel to the first axis (L1); at the release position, the pivot axle (50) is at a second position of the slide groove (24), and the slide groove (24) is perpendicular to the first axis (L1) and the second axis (L2); the second connection end (12) comprises a combination bore (13) on the first axis (L1) toward the first connection end (11); at the engagement position, the first end (21) of the shaft (20) is inserted in the combination bore (13); at the release position, the first end (21) of the shaft (20) is allowed to leave the combination bore (13).

2. The foldable pedal (100) of claim 1, wherein a protrusion ring (23) is disposed between the first end (21) and the second end (22) of the shaft (20); the protrusion ring (23) is on an outer side of the shaft bore (31); a length from the protrusion ring (23) to an end surface of the first end (21) is smaller than a length from the protrusion ring (23) to an end surface of the second end (22); a length of the shaft (20) in the pedal body (30) is larger than a half of a length of the pedal body (30).

3. The foldable pedal (100) of claim 2, wherein a bearing (60) is mounted around the second end (22) of the shaft (20) for providing a supporting effect in the shaft bore (31); the bearing (60) comprises an anti-loosening screw member (70) on one side thereof and screwed to the second end (22); a support ring (61) is disposed between the first end (21) and the second end (22) of the shaft (20) for providing a supporting effect in the shaft bore (31).

4. The foldable pedal (100) of claim 1, wherein the engagement device (40) comprises a sleeve (41), two operation members (42, 42a), and two engagement members (43, 43a); the sleeve (41) is mounted around the connection member (10); the two operation members (42, 42a) are symmetrically disposed on two sides of the sleeve (41) and slidable in a direction perpendicular to the first axis (L1); the two engagement members (43, 43a) are disposed between the first end (21) of the shaft (20) and the two operation members (42, 42a); at the engagement position, the two engagement members (43, 43a) are engaged on two sides of the first end (21); when the two operation members (42, 42a) slide perpendicularly in the direction to the first axis (L1) so that the engagement device (40) changes to the release position, the two operation members (42, 42a) release an engagement between the two engagement members (43, 43a) and the first end (21) of the shaft (20), such that the shaft (20) is allowed to pivot to be arranged in a perpendicular alignment with respect to the first axis (L1).

5. The foldable pedal (100) of claim 4, wherein the first end (21) of the shaft (20) comprises a ring groove (25); each of two sides of the connection member (10) comprises a through groove (14) passing therethrough the combination bore (13); each of the two engagement members (43, 43a) comprises an engagement portion (431, 431a); at the engagement position, the two engagement portions (431, 431a) of the two engagement members (43, 43a) are engaged on two sides of the ring groove (25) through the through grooves (14).

6. The foldable pedal (100) of claim 5, wherein the sleeve (41) comprises a sleeving bore (411) to be mounted around the connection member (10); the sleeve (41) comprises two installation grooves (412) disposed on two sides thereof and connected with the sleeving bore (411), and the two installation grooves (412) face the positions of the two corresponding through grooves (14); the two installation grooves (412) are configured to contain the two operation members (42, 42a) therein.

7. The foldable pedal (100) of claim 6, wherein an elastic member (44) is included; the elastic member (44) comprises two foot ends (441) and an arc-shaped deformation portion (422) between the two foot ends (441); the two foot ends (441) are connected with the two operation members (42, 42a); the deformation portion (442) keeps the two operation members (42, 42a) leaning away from the first axis (L1), such that the two engagement portions (431, 431a) of the two engagement members (43, 43a) permanently move toward each other to be engaged with the ring groove (25).

8. The foldable pedal (100) of claim 7, wherein the engagement portions (431, 431a) of the engagement members (43, 43a) are formed in a concave arc shape, and two linkage portions (432, 432a) are disposed in opposite to the corresponding engagement portions (431, 431a), wherein each of the linkage portions (432, 432a) is linked with one of the foot ends (441); at the engagement position, the two foot ends (441) force the two linkage portions (432, 432a) to lean in a direction away from the first axis (L1), such that the engagement portions (431, 431a) are engaged with the ring groove (25) respectively; at the release position, the two operation members (42, 42a) cause the deformation portion (442) to elastically deform, so that the two foot ends (441) no longer abut against the two linkage portions (432, 432a), and the two operation members (42, 42a) push the two engagement members (43 43a), thereby releasing an engagement between the two engagement portions (431, 431a) and the ring groove (25).

9. The foldable pedal (100) of claim 8, wherein the two engagement members (43, 43a) are both formed in a ring shape and mounted around the connection member (10) to be overlapped on the first axis (L1); each of the linkage portions (432, 432a) is formed in a notch to be combined with one of the corresponding foot ends (441); each of the foot ends (441) passes through one of the corresponding operation members (42, 42a).

10. The foldable pedal (100) of claim 9, wherein a transition section (443) is arranged between the deformation portion (422) and each of the foot ends (441), such that the two transition sections (443) bend the two foot ends (441) to extend in a direction parallel to the first axis (L1).

11. The foldable pedal (100) of claim 10, wherein the sleeve (41) comprises two position limiting grooves (413) respectively disposed on two sides of the sleeving bore (411) and connected with the sleeving bore (411); at the engagement position, the two foot ends (441) abut in the two position limiting grooves (413), respectively; at the release position, the deformation portion (442) elastically deforms, such that the two foot ends (441) slide toward the first axis (L1) along the two position limiting grooves (413).

## Patentansprüche

1. Ein klappbares Pedal (100), umfassend:
ein Verbindungselement (10), das ein erstes Verbindungsende (11) und ein zweites Verbindungsende (12) aufweist, welches gegenüberliegend zum ersten Verbindungsende (11) entlang einer ersten Achse(L1) angeordnet ist;
eine Welle (20), die ein erstes Ende (21) und ein zweites Ende (22) aufweist, das gegenüberliegend zum ersten Ende (21) angeordnet ist, wobei das erste Ende (21) entlang einer senkrecht zur ersten Achse (L1) stehenden zweiten Achse (L2) schwenkbar mit dem zweiten Verbindungsende (12) verbunden ist, sodass die Welle (20) relativ zum Verbindungselement (10) geschwenkt wird;
einen Pedalkörper (30), der eine zur Aufnahme des zweiten Endes (22) der Welle (20) dienende Wellenaufnahmebohrung (31) aufweist, wobei die Welle (20) relativ zur Wellenaufnahmebohrung (31) drehbar ist;
eine am Verbindungselement (10) angeordnete Eingriffsvorrichtung (40), welche zwischen einer Eingriffsposition und einer Freigabeposition umschaltbar ist; wenn sich die Eingriffsvorrichtung (40) in der Eingriffsposition befindet, steht sie mit dem ersten Ende (21) der Welle (20) in Eingriff, sodass die Welle (20) koaxial zur ersten Achse (L1) ausgerichtet ist; wenn sich die Eingriffsvorrichtung (40) in der Freigabeposition befindet, ist der Pedalkörper (30) relativ zu einer Kurbel (1) klappbar;
wobei die erste Achse (L1) die zweite Achse (L2) in einem Drehpunkt (X) schneidet; die Eingriffsvorrichtung (40) und der Drehpunkt (X) auf einer Außenseite des Pedalkörpers (30) angeordnet sind und die Eingriffsvorrichtung (40) sich zwischen dem ersten Verbindungsende (11) und dem Drehpunkt (X) befindet; in der Freigabeposition der Pedalkörper (30) um den Drehpunkt (X) relativ zur Kurbel (1) geklappt wird,
**dadurch gekennzeichnet, dass**:
eine Drehachse (50) inbegriffen ist; das erste Ende (21) der Welle (20) eine entlang der Achsrichtung verlaufende Gleitausnehmung (24) aufweist und die Drehachse (50) entlang der zweiten Achse (L2) zwischen der Gleitausnehmung (24) und dem zweiten Verbindungsende (12) durchgeht; in der Eingriffsposition sich die Drehachse (50) an einer ersten Position der Gleitausnehmung (24) befindet, wobei die Gleitausnehmung (24) parallel zur ersten Achse (L1) verläuft; in der Freigabeposition sich die Drehachse (50) an einer zweiten Position der Gleitausnehmung (24) befindet, wobei die Gleitausnehmung (24) senkrecht zur ersten Achse (L1) und zur zweiten Achse (L2) steht; das zweite Verbindungsende (12) eine auf der ersten Achse (L1) in Richtung des ersten Verbindungsendes (11) befindliche Verbindungsbohrung (13) aufweist; in der Eingriffsposition das erste Ende (21) der Welle (20) in die Verbindungsbohrung (13) eingeführt ist; in der Freigabeposition das erste Ende (21) der Welle (20) die Verbindungsbohrung (13) verlassen kann.

2. Klappbares Pedal (100) nach Anspruch 1, wobei ein Vorsprungring (23) zwischen dem ersten Ende (21) und dem zweiten Ende (22) der Welle (20) angeordnet ist; der Vorsprungring (23) sich auf einer Außenseite der Wellenaufnahmebohrung (31) befindet; eine Länge vom Vorsprungring (23) zu einer Endfläche des ersten Endes (21) kleiner als eine Länge vom Vorsprungring (23) zu einer Endfläche des zweiten Endes (22) ist; eine Länge der Welle (20) im Pedalkörper (30) größer als die Hälfte einer Länge des Pedalkörpers (30) ist.

3. Klappbares Pedal (100) nach Anspruch 2, wobei ein Lager (60) um das zweite Ende (22) der Welle (20) herum montiert ist, um eine Stützwirkung innerhalb der Wellenaufnahmebohrung (31) bereitzustellen; das Lager (60) ein auf einer Seite davon angeordnetes gegen Lösen gesichertes Schraubenelement (70) umfasst, welches am zweiten Ende (22) verschraubt ist; ein Stützring (61) zwischen dem ersten Ende (21) und dem zweiten Ende (22) der Welle (20) angeordnet ist, um eine Stützwirkung innerhalb der Wellenaufnahmebohrung (31) bereitzustellen.

4. Klappbares Pedal (100) nach Anspruch 1, wobei die Eingriffsvorrichtung (40) eine Hülse (41), zwei Betätigungselemente (42, 42a) und zwei Eingriffselemente (43, 43a) umfasst; die Hülse (41) um das Verbindungselement (10) montiert ist; die beiden Betätigungselemente (42, 42a) symmetrisch auf zwei Seiten der Hülse (41) angeordnet und in einer Richtung senkrecht zur ersten Achse (L1) verschiebbar sind; die beiden Eingriffselemente (43, 43a) zwischen dem ersten Ende (21) der Welle (20) und den beiden Betätigungselementen (42, 42a) angeordnet sind; in der Eingriffsposition die beiden Eingriffselemente (43, 43a) auf zwei Seiten des ersten Endes (21) in Eingriff stehen; wenn die beiden Betätigungselemente (42, 42a) senkrecht zur ersten Achse (L1) verschoben werden, wodurch die Eingriffsvorrichtung (40) in die Freigabeposition wechselt, die beiden Betätigungselemente (42, 42a) den Eingriff zwischen den beiden Eingriffselementen (43, 43a) und dem ersten Ende (21) der Welle (20) lösen, sodass die Welle (20) in einer senkrechten Ausrichtung relativ zur ersten Achse (L1) geschwenkt werden kann.

5. Klappbares Pedal (100) nach Anspruch 4, wobei das erste Ende (21) der Welle (20) eine Ringnut (25) aufweist; jede der beiden Seiten des Verbindungselements (10) eine Durchgangsausnehmung (14) aufweist, die durch die Verbindungsbohrung (13) durchgeht; jedes der beiden Eingriffselemente (43, 43a) einen Eingriffsabschnitt (431, 431a) aufweist; in der Eingriffsposition die beiden Eingriffsabschnitte (431, 431a) durch die Durchgangsausnehmungen (14) auf zwei Seiten der Ringnut (25) in Eingriff gebracht sind.

6. Klappbares Pedal (100) nach Anspruch 5, wobei die Hülse (41) eine zum Befestigen um das Verbindungselement (10) vorgesehene Hülsenbohrung (411) aufweist; die Hülse (41) zwei Montagenuten (412) aufweist, die an zwei Seiten davon angeordnet und mit der Hülsenbohrung (411) verbunden sind und die beiden Montagenuten (412) den Positionen der beiden entsprechenden Durchgangsausnehmungen (14) gegenüberliegen; die Montagenuten (412) so ausgelegt sind, dass die beiden Betätigungselemente (42, 42a) darin aufgenommen werden.

7. Klappbares Pedal (100) nach Anspruch 6, wobei ein elastisches Element (44) vorgesehen ist; das elastische Element (44) zwei Fußenden (441) und einen zwischen den beiden Fußenden (441) befindlichen bogenförmigen Verformungsabschnitt (442) aufweist; die beiden Fußenden (441) mit den beiden Betätigungselementen (42, 42a) verbunden sind; der Verformungsabschnitt (442) dafür sorgt, dass sich die beiden Betätigungselemente (42, 42a) von der ersten Achse (L1) weg neigen, sodass sich die Eingriffsabschnitte (431, 431a) der beiden Eingriffselemente (43, 43a) permanent aufeinander zubewegen, um mit der Ringnut (25) in Eingriff gebracht zu werden.

8. Klappbares Pedal (100) nach Anspruch 7, wobei die Eingriffsabschnitte (431, 431a) der Eingriffselemente (43, 43a) in einer konkaven Bogenform ausgebildet sind, und zwei Koppelabschnitte (432, 432a) gegenüberliegend zu den entsprechenden Eingriffsabschnitten (431, 431a) angeordnet sind, und jeder der Koppelabschnitte (432, 432a) mit einem der Fußenden (441) gekoppelt ist; in der Eingriffsposition die Fußenden (441) die Koppelabschnitte (432, 432a) dazu zwingen, sich in einer Richtung weg von der ersten Achse (L1) zu neigen, sodass die Eingriffsabschnitte (431, 431a) jeweils mit der Ringnut (25) in Eingriff gebracht werden; in der Freigabeposition die Betätigungselemente (42, 42a) den Verformungsabschnitt (442) elastisch verformen, sodass die Fußenden (441) nicht mehr an den Koppelabschnitten (432, 432a) anliegen und die Betätigungselemente (42, 42a) die Eingriffselemente (43, 43a) drücken, wodurch der Eingriff zwischen den beiden Eingriffsabschnitten (431, 431a) und der Ringnut (25) gelöst wird.

9. Klappbares Pedal (100) nach Anspruch 8, wobei die beiden Eingriffselemente (43, 43a) jeweils ringförmig ausgebildet und um das Verbindungselement (10) herum montiert sind, sodass sie sich auf der ersten Achse (L1) überlagern; jeder der Koppelabschnitte (432, 432a) in Form einer Einkerbung ausgebildet ist, um mit einem der entsprechenden Fußenden (441) verbunden zu werden; jedes Fußende (441) durch eines der entsprechenden Betätigungselemente (42, 42a) durchgeht.

10. Klappbares Pedal (100) nach Anspruch 9, wobei ein Übergangsabschnitt (443) zwischen dem Verformungsabschnitt (442) und jedem der Fußenden (441) vorgesehen ist, sodass die Übergangsabschnitte (443) die Fußenden (441) derart biegen, dass sie sich in einer Richtung parallel zur ersten Achse (L1) dehnen.

11. Klappbares Pedal (100) nach Anspruch 10, wobei die Hülse (41) zwei Positionsbegrenzungsaussparungen (413) aufweist, die jeweils auf zwei Seiten der Hülsenbohrung (411) vorgesehen und mit der Hülsenbohrung (411) verbunden sind; in der Eingriffsposition die beiden Fußenden (441) jeweils in den Positionsbegrenzungsaussparungen (413) anliegen; in der Freigabeposition der Verformungsabschnitt (442) elastisch verformt wird, wodurch die beiden Fußenden (441) in Richtung der ersten Achse (L1) entlang der beiden Positionsbegrenzungsaussparungen (413) gleiten.

## Revendications

1. - Pédale pliable (100), comprenant :
un élément de liaison (10) comprenant une première extrémité de liaison (11) et une seconde extrémité de liaison (12) disposée à l'opposé de la première extrémité de liaison (11) le long d'un premier axe (L1) ;
un arbre (20) comprenant une première extrémité (21) et une seconde extrémité (22) disposée à l'opposé de la première extrémité (21), la première extrémité (21) étant reliée de manière pivotante à la seconde extrémité de liaison (12) le long d'un second axe (L2) qui est perpendiculaire au premier axe (L1), de telle sorte que l'arbre (20) pivote par rapport à l'élément de liaison (10) ;
un corps de pédale (30) comprenant un alésage d'arbre (31) pour recevoir la seconde extrémité (22) de l'arbre (20), l'arbre (20) étant apte à tourner par rapport à l'alésage d'arbre (31) ;
un dispositif d'engagement (40) disposé sur l'élément de liaison (10) et commutable entre une position d'engagement et une position de libération ; lorsque le dispositif d'engagement (40) est à la position d'engagement, le dispositif d'engagement (40) est engagé avec la première extrémité (21) de l'arbre (20), de telle sorte que l'arbre (20) est disposé en alignement coaxial avec le premier axe (L1) ; lorsque le dispositif d'engagement (40) est à la position de libération, le corps de pédale (30) est pliable par rapport à une manivelle (1) ;
dans lequel le premier axe (L1) croise le second axe (L2) à un point de pivot (X) ; le dispositif d'engagement (40) et le point de pivot (X) sont disposés sur un côté extérieur du corps de pédale (30), et le dispositif d'engagement (40) est entre la première extrémité de liaison (11) et le point de pivot (X) ; à la position de libération, le corps de pédale (30) est plié autour du point de pivot (X) par rapport à la manivelle (1),
**caractérisée par le fait que** :
un axe de pivot (50) est compris, la première extrémité (21) de l'arbre (20) comprend une rainure de coulissement (24) disposée le long d'une direction axiale, et l'axe de pivot (50) traverse entre la rainure de coulissement (24) et la seconde extrémité de liaison (12) le long du second axe (L2) ; à la position d'engagement, l'axe de pivot (50) est à une première position de la rainure de coulissement (24), et la rainure de coulissement (24) est parallèle au premier axe (L1) ; à la position de libération, l'axe de pivot (50) est à une seconde position de la rainure de coulissement (24), et la rainure de coulissement (24) est perpendiculaire au premier axe (L1) et au second axe (L2) ; la seconde extrémité de liaison (12) comprend un alésage de combinaison (13) sur le premier axe (L1) vers la première extrémité de liaison (11) ; à la position d'engagement, la première extrémité (21) de l'arbre (20) est introduite dans l'alésage de combinaison (13) ; à la position de libération, la première extrémité (21) de l'arbre (20) est autorisée à quitter l'alésage de combinaison (13).

2. - Pédale pliable (100) selon la revendication 1, dans laquelle une bague de saillie (23) est disposée entre la première extrémité (21) et la seconde extrémité (22) de l'arbre (20) ; la bague de saillie (23) est sur un côté extérieur de l'alésage d'arbre (31) ; une longueur allant de la bague de saillie (23) à une surface d'extrémité de la première extrémité (21) est inférieure à une longueur allant de la bague de saillie (23) à une surface d'extrémité de la seconde extrémité (22) ; une longueur de l'arbre (20) dans le corps de pédale (30) est supérieure à la moitié d'une longueur du corps de pédale (30).

3. - Pédale pliable (100) selon la revendication 2, dans laquelle un palier (60) est monté autour de la seconde extrémité (22) de l'arbre (20) pour assurer un effet de support dans l'alésage d'arbre (31) ; le palier (60) comprend un élément de vis anti-desserrage (70) sur l'un de ses côtés et vissé à la seconde extrémité (22) ; une bague de support (61) est disposée entre la première extrémité (21) et la seconde extrémité (22) de l'arbre (20) pour assurer un effet de support dans l'alésage d'arbre (31).

4. - Pédale pliable (100) selon la revendication 1, dans laquelle le dispositif d'engagement (40) comprend un manchon (41), deux éléments d'actionnement (42, 42a), et deux éléments d'engagement (43, 43a) ; le manchon (41) est monté autour de l'élément de liaison (10) ; les deux éléments d'actionnement (42, 42a) sont disposés symétriquement sur les deux côtés du manchon (41) et aptes à coulisser dans une direction perpendiculaire au premier axe (L1) ; les deux éléments d'engagement (43, 43a) sont disposés entre la première extrémité (21) de l'arbre (20) et les deux éléments d'actionnement (42, 42a) ; à la position d'engagement, les deux éléments d'engagement (43, 43a) sont engagés sur deux côtés de la première extrémité (21) ; lorsque les deux éléments d'actionnement (42, 42a) coulissent perpendiculairement dans la direction du premier axe (L1) de telle sorte que le dispositif d'engagement (40) passe à la position de libération, les deux éléments d'actionnement (42, 42a) libèrent un engagement entre les deux éléments d'engagement (43, 43a) et la première extrémité (21) de l'arbre (20), de telle sorte que l'arbre (20) est autorisé à pivoter pour être disposé dans un alignement perpendiculaire par rapport au premier axe (L1).

5. - Pédale pliable (100) selon la revendication 4, dans laquelle la première extrémité (21) de l'arbre (20) comprend une rainure annulaire (25) ; chacun des deux côtés de l'élément de liaison (10) comprend une rainure traversante (14) passant à travers l'alésage de combinaison (13) ; chacun des deux éléments d'engagement (43, 43a) comprend une partie d'engagement (431, 431a) ; à la position d'engagement, les deux parties d'engagement (431, 431a) des deux éléments d'engagement (43, 43a) sont engagées sur deux côtés de la rainure annulaire (25) à travers les rainures traversantes (14).

6. - Pédale pliable (100) selon la revendication 5, dans laquelle le manchon (41) comprend un alésage de manchonnage (411) destiné à être monté autour de l'élément de liaison (10) ; le manchon (41) comprend deux rainures d'installation (412) disposées sur deux côtés de celui-ci et reliées à l'alésage de manchonnage (411), et les deux rainures d'installation (412) font face aux positions des deux rainures traversantes correspondantes (14) ; les deux rainures d'installation (412) sont configurées pour contenir les deux éléments d'actionnement (42, 42a) dans celles-ci.

7. - Pédale pliable (100) selon la revendication 6, dans laquelle un élément élastique (44) est compris ; l'élément élastique (44) comprend deux extrémités de pied (441) et une partie de déformation en forme d'arc (422) entre les deux extrémités de pied (441) ; les deux extrémités de pied (441) sont reliées aux deux éléments d'actionnement (42, 42a) ; la partie de déformation (442) maintient les deux éléments d'actionnement (42, 42a) se penchant dans une direction opposée au premier axe (L1), de sorte que les deux parties d'engagement (431, 431a) des deux éléments d'engagement (43, 43a) se rapprochent en permanence l'une de l'autre pour être engagées avec la rainure annulaire (25).

8. - Pédale pliable (100) selon la revendication 7, dans laquelle les parties d'engagement (431, 431a) des éléments d'engagement (43, 43a) sont formées en arc concave, et deux parties de liaison (432, 432a) sont disposées à l'opposé des parties d'engagement correspondantes (431, 431a), chacune des parties de liaison (432, 432a) étant liée à l'une des extrémités du pied (441) ; à la position d'engagement, les deux extrémités de pied (441) forcent les deux parties de liaison (432, 432a) à se pencher dans une direction opposée au premier axe (L1), de telle sorte que les parties d'engagement (431, 431a) sont engagées avec la rainure annulaire (25) respectivement ; à la position de libération, les deux éléments d'actionnement (42, 42a) provoquent la déformation élastique de la partie de déformation (442), de telle sorte que les deux extrémités du pied (441) ne viennent plus en butée contre les deux parties de liaison (432, 432a), et les deux éléments d'actionnement (42, 42a) poussent les deux éléments d'engagement (43 43a), libérant ainsi un engagement entre les deux parties d'engagement (431, 431a) et la rainure annulaire (25).

9. - Pédale pliable (100) selon la revendication 8, dans laquelle les deux éléments d'engagement (43, 43a) sont tous deux formés en anneau et montés autour de l'élément de liaison (10) pour se chevaucher sur le premier axe (L1) ; chacune des parties de liaison (432, 432a) est formée en une encoche à combiner avec l'une des extrémités de pied correspondantes (441) ; chacune des extrémités de pied (441) passe à travers l'un des éléments d'actionnement correspondants (42, 42a).

10. - Pédale pliable (100) selon la revendication 9, dans laquelle une section de transition (443) est disposée entre la portion de déformation (422) et chacune des extrémités de pied (441), de telle sorte que les deux sections de transition (443) plient les deux extrémités du pied (441) pour les étendre dans une direction parallèle au premier axe (L1).

11. - Pédale pliable (100) selon la revendication 10, dans laquelle le manchon (41) comprend deux rainures de limitation de position (413) respectivement disposées sur deux côtés de l'alésage de manchonnage (411) et reliées à l'alésage de manchonnage (411) ; à la position d'engagement, les deux extrémités de pied (441) viennent en butée dans les deux rainures de limitation de position (413), respectivement ; à la position de libération, la partie de déformation (442) se déforme élastiquement, de telle sorte que les deux extrémités de pied (441) coulissent vers le premier axe (L1) le long des deux rainures de limitation de position (413).
